# EUROPÄISCHE PATENTSCHRIFT

(11) **EP 1 934 569 B1**
(45) Veröffentlichungstag und Bekanntmachung des Hinweises auf die Patenterteilung: **20.01.2016**
(21) Anmeldenummer: 06792150.2
(22) Anmeldetag: 20.09.2006
(51) Int. Cl.: G01K 11/16

(54) **BAUSTOFFMATERIAL**
BUILDING MATERIAL
MATERIAU DE CONSTRUCTION

(30) Priorität: 14.10.2005 DE 102005049733; 03.11.2005 DE 102005052925
(43) Veröffentlichungstag der Anmeldung: 25.06.2008
(73) Patentinhaber: EWALD DÖRKEN AG, 58313 Herdecke (DE)
(72) Erfinder: SCHRÖER, Jörn, 58313 Herdecke (DE); JABLONKA, Dieter, 58313 Herdecke (DE); RAIDT, Heinz, Peter, 44227 Dortmund (DE); LAUR, Rüdiger, 44225 Dortmund (DE)
(74) Vertreter: Von Rohr Patentanwälte Partnerschaft mbB
(86) Internationale Anmeldenummer: PCT/EP2006/009107
(87) Internationale Veröffentlichungsnummer: WO 2007/042127

(56) Entgegenhaltungen:
- WO-A-01/79001
- WO-A-01/92633
- WO-A-97/29523
- WO-A-03/026883

## Beschreibung

Die Erfindung betrifft ein Baustoffmaterial zur Verwendung in einem Baubereich.

Die im Baubereich, insbesondere im Bereich des Gebäudebaus, eingesetzten Baustoffmaterialien können in der Regel nur in bestimmten Temperaturbereichen verarbeitet werden. Ist die Umgebungstemperatur und damit die Temperatur des Baustoffmaterials oder eines Untergrundes, auf den das Baustoffmaterial aufgebracht werden soll, zu niedrig oder zu hoch, ist eine sachgerechte Verarbeitung zum Teil nicht möglich. Werden die Verarbeitungshinweise nicht sorgfältig genug beachtet, kann es dazu kommen, dass die Baustoffmaterialien bei der Verarbeitung beschädigt oder zerstört werden oder dass nach der Verarbeitung der Baustoffmaterialien Schäden im Baubereich auftreten, die auf eine nicht sachgerechte Verarbeitung bei zu niedrigen oder zu hohen Temperaturen zurückzuführen ist. Beispielsweise ist die Haftfähigkeit von Klebstoffmaterialien, insbesondere von Klebebändern, Klebefolien, Teppichklebern, Fliesenklebern oder dgl., bei zu niedrigen Verarbeitungstemperaturen stark eingeschränkt, was dazu führen kann, dass ein Verkleben nicht möglich ist. Beschichtungen, wie beispielsweise Farben oder Grundierungen, haften bei zu niedrigen oder zu hohen Verarbeitungstemperaturen ebenfalls nicht.

Die WO 03/026883 A1 offenbart ein energiesparendes Dachdeckmaterial, das mit einem thermochromen Material beschichtet ist und dadurch seine Energiereflektionseigenschaften ändern kann. Das Dachdeckmaterial kann Strahlungswärme bei wärmeren Temperaturen aufgrund einer entsprechenden Farbänderung reflektieren und Strahlungswärme bei kühleren Temperaturen absorbieren und die absorbierte Energie in das Innere des Gebäudes abstrahlen.

Die WO 97/29523 A1 offenbart ein Etikett für eine elektrochemische Zelle, das als Batterietester ausgebildet ist und ein thermochromes Material beinhaltet. Der Tester wird durch Druck aktiviert und verbindet ein leitfähiges Material mit den Enden der Batterie. Dadurch wird das leitfähige Material durch Stromfluss erhitzt und bewirkt einen Wechsel im thermochromen Material, so dass der Zustand der Zelle angezeigt wird.

Die WO 01/79001 A1 offenbart eine Beleuchtungsvorrichtung mit einem thermochromen Etikett. Die Beleuchtungsvorrichtung kann als Kerze oder Behälter für die Kerze ausgebildet sein. Eine Schrumpffolie ist um die Kerze oder um den Kerzenbehälter geschrumpft. Die Folie ist mit thermochromer Tinte dekoriert, um hierdurch einen ansprechenden visuellen Effekt zu erzeugen.

Der Erfindung liegt die Aufgabe zugrunde, ein neuartiges Baustoffmaterial zur Verwendung im Baubereich zur Verfügung zu stellen, das in einfacher Weise sachgerecht verarbeitet werden kann.

Zur Lösung der vorgenannten Aufgabe weist das erfindungsgemäße Baustoffmaterial wenigstens ein thermochromes Material auf, wobei das thermochrome Material die Farbe und/oder die Transparenz in Abhängigkeit von einer Schalttemperatur ändert und wobei eine Farb- und/oder eine Transparenzänderung im Temperaturbereich der unteren und/oder der oberen Verarbeitungstemperatur des Baustoffsmaterials erfolgt.

Thermochromie beinhaltet die Eigenschaft eines Materials, in Abhängigkeit von der Temperatur reversibel oder irreversibel seine Farbe und/oder die Transparenz zu ändern. Der Erfindung liegt der Grundgedanke zugrunde, das Unterschreiten der unteren Verarbeitungstemperatur und/oder das Überschreiten der oberen Verarbeitungstemperatur des Baustoffmaterials und/oder der Verarbeitungstemperatur eines mit dem Baustoffmaterial zu verarbeitenden weiteren Baustoffmaterials durch eine Farb- oder Transparenzänderung des thermochromen Materials erkennbar zu machen. Dadurch können Schäden, die bei der Verarbeitung des erfindungsgemäßen Baustoffmaterials bei zu geringen oder zu hohen Materialtemperaturen und/oder Umgebungstemperaturen auftreten, in einfacher Weise verhindert werden. Darüber hinaus kann in einfacher Weise beurteilt werden, ob eine Verarbeitung des betreffenden Baustoffmaterials bei den herrschenden Umgebungstemperaturen überhaupt möglich ist, wobei eine Farb- und/oder eine Transparenzänderung des Baustoffmaterials anzeigt, dass eine zulässige Verarbeitungstemperatur des Baustoffmaterials unter bzw. -überschritten ist.

Die Auswahl eines thermochromen Materials erfolgt in Abhängigkeit von der zulässigen oder bevorzugten Verarbeitungstemperatur des Baustoffmaterials, wobei die Schalttemperatur des thermochromen Materials unter anderem dessen Eignung zur Verwendung als Indikator für die Verarbeitbarkeit des betreffenden Baustoffmaterials festlegt. In diesem Zusammenhang kann die Verarbeitbarkeit eines Baustoffmaterials beispielsweise durch die Haftfähigkeit eines zum Verkleben des Baustoffmaterials vorgesehenen Klebstoffes in Abhängigkeit von der relativen Luftfeuchtigkeit im Baubereich festgelegt sein. Mit sinkender Lufttemperatur steigt die relative Luftfeuchtigkeit an. Hier kann ein thermochromes Material gewählt werden, dessen Schalttemperatur der Taupunkttemperatur bei einem bestimmten Wasserdampfgehalt der feuchten Luft entspricht, so dass eine Taupunktunterschreitung und damit die Verarbeitungsgrenztemperatur des Klebstoffes angezeigt werden kann.

Bei der Schalttemperatur im Sinne der Erfindung kann es sich vorzugsweise um die obere Schalttemperatur oder Umschlagstemperatur des thermochromen Materials handeln. Bei Erreichen der oberen Schalttemperatur ist das thermochrome Material im wesentlichen farblos. Mit sinkender Temperatur nimmt die Farbintensität des thermochromen Materials zu, bis die Farbintensität bei Erreichen der unteren Schalttemperatur ein Maximum erreicht hat. Der Temperaturbereich zwischen der oberen und der unteren Schalttemperatur wird nachfolgend Schalttemperaturbereich genannt. Darüber hinaus sind thermochrome Materialien bekannt, deren Farbintensität mit steigender Temperatur zunimmt, so dass bei Erreichen der oberen Schalttemperatur das thermochrome Material eine maximale Farbintensität aufweist. Im übrigen sind thermochrome Materialien bekannt, die bei Temperaturen unterhalb der unteren Schalttemperatur eine erste Farbe aufweisen und bei Temperaturen oberhalb der oberen Schalttemperatur eine weitere Farbe aufweisen.

Unterschiedlichste Farbschaltungen können in vorher determinierten Schalttemperaturbereichen erzielt werden. Die Farbschaltungen können über einen breiten Schalttemperaturbereich von ΔT zwischen 0,1 °C bis 25 °C oder, vorzugsweise, über einen engen Temperaturbereich von ΔT zwischen 0,1 °C bis 5 °C erfolgen. Je enger der Schalttemperaturbereich ist, desto leichter ist ein Unterschreiten oder ein Überschreiten einer geforderten oder zulässigen Verarbeitungstemperatur des Baustoffmaterials erkennbar.

Das erfindungsgemäße Baustoffmaterial kann insbesondere zur Verwendung im Bereich des Gebäudebaus eingesetzt werden. Vorzugsweise kann es sich bei dem erfindungsgemäßen Baustoffmaterial um bahn-, band- oder plattenförmige Baustoffmaterialien, wie beispielsweise Klebebänder, (selbstklebende) Folien, Abdichtbahnen, Trägermaterialien wie Entkopplungsbahnen und Noppenbahnen, Dampfsperren bzw. -bremsen, Unterdeckbahnen, Baustoffgewebe oder -gelege aus Fasern und/oder Filamenten, Gipskartonplatten, Spanplatten, (Fassaden-)Platten, Papiere, Pappen, Tapeten, oder dgl. handeln. Zu den plattenförmigen Baustoffmaterialien zählen unter anderen auch Steine und Fliesen. Darüber hinaus fallen unter den Begriff Baustoffmaterial im Sinne der Erfindung auch fließ- und streichfähigesowie verkleb-, verfüll- und auftragbare Massen, wie beispielsweise Grundierungen, Klebstoffe, Putze, Betone, Estriche, Lehme, (Druck)Farben, Lasuren, Beschichtungen, Appreturen oder dgl. Schließlich können auch im Baubereich eingesetzte Spritzgußteile wenigstens ein thermochromes Material aufweisen, um die Verarbeitungstemperatur des Spritzgußteils und/oder eines mit dem Spritzgußteil zu verarbeitenden weiteren Baustoffmaterials zu detektieren. Die vorgenannten Baustoffe sind exemplarisch ausgewählt, wobei auch andere an sich bekannte Baustoffe durch Einsatz eines thermochromen Materials entsprechend funktionalisiert werden können.

Die vorgenannten Baustoffmaterialen sind wie bereits erwähnt vorzugsweise im Bereich des Gebäudebaus einsetzbar. Grundsätzlich können jedoch beliebige Baustoffmaterialien auch aus anderen Baubereichen, beispielsweise aus dem Fahrzeugbau, wenigstens ein thermochromes Material aufweisen, das das Unterschreiten oder das Überschreiten der Verarbeitungstemperatur anzeigt.

Bei der Verarbeitungstemperatur handelt es sich im Sinne der Erfindung um die zulässige und/oder von einem Hersteller geforderte minimale oder maximale Materialtemperatur oder eine zulässige Umgebungstemperatur, die es ermöglicht, das Baustoffmaterial als solches, beispielsweise einen Klebstoff, eine Farbe oder eine Grundierung, oder ein mit dem Baustoffmaterial zu verarbeitendes weiteres Baustoffmaterial sachgerecht zu verarbeiten. Im Zusammenhang mit der Erfindung ist der Begriff "Verarbeitungstemperatur" darüber hinaus gegebenenfalls auch als Funktionstemperatur zu verstehen, wobei es sich bei der Funktionstemperatur um die Temperatur oder den Temperaturbereich handeln kann, bei der bzw. in dem die Funktionalität des Baustoffmaterials gewährleistet ist. Bei dem weiteren Baustoffmaterial kann es sich beispielsweise um einen handelsüblichen Fliesenkleber handeln, der auf eine zwischen einem Untergrund und einem keramischen Belag eingesetzte Entkopplungsmatte aufgebracht werden soll. Die Entkopplungsmatte kann das thermochrome Material aufweisen, dessen Schalttemperatur auf die geforderte oder zulässige Verarbeitungstemperatur des Fliesenklebers ausgelegt ist. Die Entkopplungsmatte zeigt durch Farbveränderung die Verarbeitungsgrenze für den Fliesenkleber an, und zwar in Abhängigkeit von der Materialtemperatur der Entkopplungsmatte. Im Ergebnis handelt es sich bei der Verarbeitungstemperatur um die Temperatur, die ein sachgerechtes Verlegen, Verkleben, Auftragen, Verfüllen oder dgl. des Baustoffmaterials zulässt und bei der Funktionstemperatur um die Temperatur, bei der die geforderte Funktion des Baustoffmaterials sichergestellt ist. Die Verarbeitungstemperatur bzw. die Funktionstemperatur des Baustoffmaterials wird bestimmt durch die Umgebungstemperatur im Baubereich bzw. die Temperatur eines Untergrundes des Baubereichs, mit dem das Baustoffmaterial verbunden wird.

Die Schalttemperatur des thermochromen Materials kann der Verarbeitungstemperatur des Baustoffmaterials im wesentlichen entsprechen. Grundsätzlich ist es natürlich auch möglich, dass die Schalttemperatur von der zulässigen oder geforderten Verarbeitungstemperatur abweicht, vorzugsweise maximal um +/- 10 °C, insbesondere um +/- 5 °C. Dadurch kann sichergestellt werden, dass es erst bei einem "spürbaren" Unterschreiten der unteren Verarbeitungstemperatur und/oder bei Überschreiten der oberen Verarbeitungstemperatur in einem erheblichen Umfang zu einer sichtbaren bzw. für einen Benutzer erkennbaren Farb- und/oder Transparenzänderung des thermochromen Materials kommt.

Das thermochrome Material kann in Abhängigkeit von der jeweiligen Verarbeitungstemperatur des Baustoffmaterials und/oder des weiteren Baustoffmaterials ausgewählt sein, wobei die Verarbeitungstemperatur unter anderem von der Art und dem Aufbau des Baustoffmaterials und dem Anwendungsbereich bzw. der Funktion abhängt. Das thermochrome Material kann in diesem Zusammenhang eine Schalttemperatur von ca. 0 °C bis 15 °C, vorzugsweise von ca. 5 °C bis 10 °C, und insbesondere eine Schalttemperatur von ca. 5 °C aufweisen. Es ist jedoch auch möglich, dass das thermochrome Material eine Schalttemperatur von ca. - 10 °C bis 10 °C, vorzugsweise von ca. - 5 °C bis 5 °C, aufweist. Eine Schalttemperatur im Bereich der Gefriertemperatur von Wasser kann insbesondere für wasserbasierte Baustoffmaterialien zur Detektion des Gefrierpunktes vorgesehen sein. Die obere Verarbeitungstemperatur kann im Bereich zwischen 30 °C und 70 °C, vorzugsweise im Bereich zwischen 40 °C und 60 °C, liegen, so dass das thermochrome Material zur Anzeige der oberen Verarbeitungstemperatur eine Schalttemperatur aus den vorgenannten Temperaturbereichen aufweisen kann.

Weiter vorzugsweise ist vorgesehen, dass bei Erreichen der Schalttemperatur eine reversible Farbänderung und/oder Transparenzänderung des thermochromen Materials erfolgt. Durch reversible Farbschaltung wird die sachgerechte Verarbeitung des Baustoffmaterials vereinfacht. Beispielsweise ist es bei zu geringen Umgebungstemperaturen möglich, die Verarbeitung des Baustoffmaterials einzustellen, und die Verarbeitung fortzusetzen, sobald die Umgebungstemperatur ausreichend stark angestiegen ist, was durch entsprechende Farb- und/oder Transparenzänderungen des thermochromen Materials angezeigt wird.

Um das Unterschreiten bzw. Überschreiten einer Mehrzahl unterschiedlicher Verarbeitungs-, Lager- oder Gebrauchstemperaturen sowie die Detektion von Wärmebrücken zu ermöglichen, die bei unterschiedlichen Temperaturen auftreten können, kann wenigstens ein weiteres thermochromes Material mit einer weiteren Schalttemperatur vorgesehen sein. Beispielsweise kann ein erstes thermochromes Material zur Detektion des Überschreitens bzw. Unterschreitens der Verarbeitungstemperatur des Baustoffmaterials, beispielsweise der Verarbeitungstemperatur einer Folienbahn, vorgesehen sein. Ein zweites thermochromes Material des Baustoffmaterials kann dagegen vorgesehen sein, um das Unterschreiten bzw. Überschreiten der Verarbeitungstemperatur eines mit der Folienbahn zu verarbeitenden weiteren Baustoffmaterials, beispielsweise eines Klebers, anzuzeigen.

Das thermochrome Material ist vorzugsweise zumindest auf der Sichtseite des Baustoffmaterials vorgesehen. Die Sichtseite bezieht sich auf den Verarbeitungs-, den Lager- oder den Gebrauchszustand des Baustoffmaterials.

Das Baustoffmaterial kann aus wenigstens einem fließ- oder streichfähigen oder pulverförmigen Ausgangsmaterial durch Zugabe des thermochromen Materials zu dem Ausgangsmaterial erhältlich sein, wobei das thermochrome Material nachträglich dem Baustoffmaterial als solchem oder bereits bei der Herstellung des Baustoffmaterials den Ausgangsmaterialien zugegeben werden kann. Vor allem bei streich- oder fließfähigen bzw. flüssigen Baustoffmaterialien oder bei Baustoffmaterialien, die erst vor der Verarbeitung hergestellt werden, wie beispielsweise Putz, Lehm oder Beton, kann das thermochrome Material direkt dem Baustoffmaterial oder dessen Ausgangskomponenten zugegeben werden. Ist das Baustoffmaterial dagegen bahn-, band- oder plattenförmig, kann eine zumindest bereichsweise mit dem thermochromen Material beschichtete oder bedruckte Trägerschicht oder ein zumindest bereichsweise mit dem thermochromen Material beschichteter oder bedruckter Trägerkörper vorgesehen sein. Wird das Baustoffmaterial teilweise mit dem thermochromen Material beschichtet oder bedruckt, trägt dies zu geringen Herstellungskosten des erfindungsgemäßen Baustoffmaterials bei. Grundsätzlich ist es natürlich auch möglich, dass bei bahn-, band- oder plattenförmigen Baustoffmaterialien eine das thermochrome Material aufweisende Trägerschicht, insbesondere eine Polymerfolie, oder ein das thermochrome Material aufweisender Trägerkörper vorgesehen ist oder dass das Baustoffmaterial als solches, das heißt in Masse, das thermochrome Material aufweist bzw. in Masse eingefärbt wird.

Das Baustoffmaterial kann einen mehrschichtigen Aufbau mit einer Mehrzahl unterschiedlicher Schichten aufweisen, wobei in wenigstens einer Schicht ein thermochromes Material vorgesehen sein kann. Eine Trägerschicht des Baustoffmaterials kann beispielsweise durch Extrusion wenigstens eines Polymermaterials unter Zumischung des thermochromen Materials und gegebenenfalls eines UV-Absorberstoffes bzw. UV-Absorptionsmaterials erhältlich sein. Der UV-Adbsorberstoff ist als Schutz gegen eine Schädigung des thermochromen Materials durch UV-Strahlen vorgesehen. Bei einer weiter bevorzugten Ausführungsform kann die Trägerschicht durch Coextrusion von wenigstens zwei Polymermaterialien erhältlich sein, wobei, vorzugsweise, lediglich ein Polymermaterial das thermochrome Material aufweist. Die vorgenannten Verfahren zur Herstellung einer Trägerschicht mit thermochromen Eigenschaften sind einfach und bei geringen Kosten durchzuführen.

Vorzugsweise weist das Baustoffmaterial das thermochrome Material gleichmäßig verteilt auf. Grundsätzlich ist es jedoch auch möglich, dass das thermochrome Material inhomogen verteilt ist. Beispielsweise ist es möglich, wenigstens zwei Polymermaterialien mit unterschiedlichen Viskositäten unter Zumischung des thermochromen Materials zu extrudieren, was zu einer inhomogenen Verteilung des thermochromen Materials in der so erhältlichen Polymerfolie führt. Eine inhomogene Verteilung lässt sich darüber hinaus dadurch erreichen, dass das thermochrome Material, gegebenenfalls mit einem Trägerstoff, erst am Ende eines Extrusionsvorgangs zugegeben wird, so dass eine homogene Vermischung mit einer Polymerschmelze nicht mehr möglich ist. Die inhomogene Verteilung des thermochromen Materials kann dazu beitragen, dass die Farb- und/oder Transparenzänderung bei Erreichen der Schalttemperatur in Teilbereichen des Baustoffmaterials stärker ausgeprägt ist, was das Erkennen eine Temperaturunter- oder -überschreitung erleichtert.

Das erfindungsgemäße Baustoffmaterial kann wenigstens eine thermochrome Klebstoffschicht aufweisen, wobei die Klebstoffschicht vorzugsweise mit einem Grundmaterial des erfindungsgemäßen Baustoffmaterials, insbesondere einer Trägerschicht, verbunden sein kann. Das thermochrome Material wird in diesem Zusammenhang vorzugsweise dem Klebstoff im fließfähigen Zustand zugegeben, was zu einer homogenen Verteilung des thermochromen Materials in der Klebstoffschicht führt.

Darüber hinaus kann eine thermochrome Vliesschicht vorgesehen sein, die vorzugsweise durch Zumischung des thermochromen Materials und gegebenenfalls eines UV-Absorbermaterials zu einer für die Herstellung des Vlieses eingesetztes Polymerschmelze erhältlich ist. Die Vliesschicht kann als Bahn oder als Teil eines Verbundes aus mehreren Schichten eingesetzt werden und mit einer polymeren Grundfolie verbunden sein.

Zum Schutz kann im übrigen eine äußere transparente Schutzschicht vorgesehen sein, die vorzugsweise ein UV-Absorbermaterial aufweisen kann.

Erfindungsgemäß kann das Baustoffmaterial ein Verpackungsmaterial zur Verpackung des Baustoffmaterials oder ein Etikett zur Etikettierung des Baustoffmaterials, jeweils mit einem thermochromen Material aufweisen, wobei das thermochrome Material die Farbe und/oder die Transparenz in Abhängigkeit von einer Schalttemperatur ändert und wobei eine Farb- und/oder eine Transparenzänderung im Temperaturbereich der unteren und/oder der oberen Verarbeitungstemperatur des Baustoffmaterials erfolgt. Durch die Verwendung thermochromer Materialien in Verpackungsmaterialien und Etiketten ist es möglich, das Unterschreiten und/oder das Überschreiten von Verarbeitungs- temperaturen der so verpackten bzw. etikettierten Baustoffmaterialien in einfacher Weise und kostengünstig anzuzeigen.

Im einzelnen gibt es eine Vielzahl von Möglichkeiten, das erfindungsgemäße Baustoffmaterial auszugestalten und weiterzubilden, wobei einerseits auf die abhängigen Patentansprüche und andererseits auf die nachfolgende detaillierte Beschreibung bevorzugter Ausführungsbeispiele der Erfindung verwiesen wird.

### Beispiel 1:

Beispiel 1 betrifft die Herstellung von Klebebändern. Bei einer ersten Ausführungsform eines Klebebandes ist es vorgesehen, in eine Acrylatdispersion, z.B. einer unter dem Handelsnamen Acronal® A 220 der BASF AG vertriebenen Acrylatdispersion, ca. 5 Gew.-% einer ca. 50%igen thermochromen Dispersion mit der Bezeichnung ChromaZone® Dispersion der Thermographic Measurements Co. Ltd. mit einer Schalttemperatur von 5 °C einzumischen. Bei dem vorgenannten thermochromen Material handelt es sich um eine thermochrome Pigmente aufweisende wäßrige Dispersion. Zur Herstellung des Klebebandes wird anschließend eine einseitig silikonisierte, weitgehend UV-undurchlässige LDPE-Folie mit der vorbeschriebenen Acrylatdispersion beschichtet und bei ca. 80 °C getrocknet, wobei die trockene Klebstoffschicht ein Flächengewicht von ca. 100 g/m² aufweist. Unterhalb der Schalttemperatur weist die Klebstoffschicht eine rote Färbung auf, was anzeigt, dass eine sachgerechte Verarbeitung des Klebebandes nicht möglich bzw. die Haftfähigkeit des Klebstoffes nicht gegeben ist. Bei Temperaturen oberhalb des Schalttemperaturbereiches sind in die in dem thermochromen Material enthaltenen Pigmente farblos, wobei die Klebstoffschicht eine helle Farbe aufweist oder ebenfalls farblos ist.

Bei einer weiteren Ausführungsform kann die LDPE-Folie zunächst mit einer thermochromen Farbe, erhältlich unter dem Handelsnamen THERMO STAR® Flexo Ink 1010 der Thermographic Measurements Co. Ltd. mit einer Schalttemperatur von 5 °C, gitterförmig im Flexodruck mit einem Flächengewicht von ca. 10 g/m² bedruckt werden. Anschließend wird eine weitgehend transparente Standard-Acrylatdispersion aufgetragen. Der so erhaltene Schichtverbund wird anschließend getrocknet. Bei Temperaturen unterhalb der oberen Schalttemperatur weisen die thermochromen Pigmente der Druckfarbe eine rote Färbung auf und zeigen so an, dass eine sachgerechte Verarbeitung des Klebebandes nicht möglich ist.

Bei einer alternativen Ausführungsform können bei dem Extrusionsvorgang zur Herstellung der LDPE-Folie mit einem Flächengewicht von 100 g/m², wie oben beschrieben, ca. 4 Gew.-% eines thermochromen Materials mit der Bezeichnung THERMOBATCH® der Thermographic Measurements Co. Ltd. mit einer Schalttemperatur von 5 °C und 3 Gew.-% eines UV-Absor-bermaterials aus LDPE mit 20 Gew.-% eines transparenten ultrafeines Titandioxid enthaltenden Absorptionsmittels mit der Bezeichnung Hombitec® RM 230 L der Sachtleben Chemie GmbH zugegeben werden. Bei Temperaturen unterhalb der Schalttemperatur weist die so erhaltene LDPE-Folie eine rote Färbung auf, was anzeigt, dass eine sachgerechte Verarbeitung des Klebebandes nicht möglich ist. Das bei dieser Ausführungsform eingesetzte thermochrome Material weist mikroverkapselte thermochrome Pigmente sowie weitere nicht thermochrome Pigmente, Kunststoffharz und Paraffine auf. Bei einer weiteren Ausführungsform kann eine Zumischung von thermochromen Pigmenten während der Silikonisierung oder die außenseitige Bedruckung des Klebebandes vorgesehen sein. Im erstgenannten Fall weist die Silikonschicht als solche das thermochrome Material auf.

An der Stelle einer Acrylatdispersion kann ein im Schmelzzustand aus einer Düse austretender Schmelzklebstoff auf der Basis von Synthesekautschuk mit der Bezeichnung TECHNOMELT® Q 8753 der Henkel Teroson GmbH zur Herstellung der Klebstoffschicht verwendet werden. Dabei werden in den aufgeschmolzenen Schmelzklebstoff 2 Gew.-% eines thermochromen pulverförmigen Materials mit der Bezeichnung ChromaZone® Free Flowing Powder der Thermographic Measurements Co. Ltd. mit einer Schalttemperatur von 5 °C eingemischt.

Alternativ zu der vorgenannten Ausführungsform kann eine Polyester-Folie verwendet werden, die auf beiden Seiten mit einer Silikonschicht beschichtet worden ist. Eine Silikonschicht auf der Sichtseite weist das thermochrome Material auf. Die mit der Polyester-Folie verbundene Klebstoffschicht kann als Transferklebstoffschicht eingesetzt werde. Das so erhaltene Klebeband wird werksseitig auf eine Unterdeckbahn aufgebracht. Der Farbumschlag bei Temperaturen unterhalb von 5 °C dient ebenfalls zur Anzeige, dass mit einer sicheren Verarbeitung der nahtselbstklebenden Unterdeckbahn nicht zu rechnen ist.

### Beispiel 2:

Die nachfolgenden Ausführungsbeispiele betreffen eine bituminöse Abdichtungsbahn und eine Grundierung. Die bituminöse Abdichtungsbahn weist eine Klebstoffschicht auf. Die Klebstoffschicht kann ein Flächengewicht von 150 g/m² aufweisen. Bei dem Klebstoff kann es sich um den unter der Bezeichnung Macromelt® der Henkel KGaA erhältlichen Klebstoff handeln. Die Klebstoffschicht weist darüber hinaus ein thermochromes pulverförmiges Material mit der Bezeichnung ChromaZone®Free Flowing Powder der Thermographic Measurements Co. Ltd. mit einem Anteil von 1,5 Gew.-% auf. Im übrigen ist die Klebstoffschicht weiß eingefärbt. Unterhalb der Schalttemperatur weist die Klebstoffschicht eine rote Färbung auf, was anzeigt, das eine sachgerechte Verarbeitung nicht möglich ist.

Als Grundierung für die vorbeschriebene bituminöse Abdichtungsbahn kann eine Bitumenemulsion auf Lösemittelbasis, beispielsweise eine Spezialgrundierung, wie sie von der Süddeutsche Teerindustrie GmbH & Co. KG vertrieben wird, vorgesehen sein. In die Bitumenemulsion werden 2 Gew.-% eines roten thermochromen pulverförmigen Materials mit der Bezeichnung ChromaZone® Free Flowing Powder der Thermographic Measurements Co. Ltd. mit einer Schalttemperatur von 5 °C eingemischt.

Zusätzlich zu dem roten thermochromen Material der vorgenannten Art kann ein schwarzes thermochromes pulverförmiges Material mit der Bezeichnung ChromaZone® Free Flowing Powder der Thermographic Measurements Co. Ltd. mit einer Schalttemperatur von - 5 °C und einem Anteil von 2 Gew.-% in eine Bitumenemulsion auf Lösemittelbasis mit der Bezeichnung BAUSION-ELASTIC der Süddeutsche Teerindustrie GmbH & Co. KG eingemischt werden. Unterhalb der Schalttemperatur des schwarzen thermochromen Materials weist die Emulsion eine schwarze Färbung auf und zeigt so an, dass eine sichere Haftung auf dem Untergrund nicht gegeben ist. Im Temperaturbereich von - 5 °C bis + 5 °C weist die Emulsion eine rote Färbung auf, was anzeigt, dass die Haftung auf dem Untergrund gewährleistet und die Grundierung auf den Untergrund aufgebracht werden kann, aber das Verkleben der Abdichtungsbahn auf der Grundierung noch nicht möglich ist.

### Beispiel 3:

Das nachfolgende Ausführungsbeispiel betrifft einen erfindungsgemäßen Putz oder Beton. In eine Mischung aus 50 Gew.-% handelsüblichem Zementputz, beispielsweise einem Zementputz mit der Bezeichnung maxit® SLK der maxit Deutschland GmbH, und 45 Gew.-% Wasser, werden 5 Gew.-% einer ca. 50 %igen thermochromen Dispersion mit der Bezeichnung ChromaZone® Dispersion der Thermographic Measurements Co. Ltd. mit einer Schalttemperatur von 5 °C eingemischt. Das thermochrome Material weist blaue thermochrome Pigmente auf. Bei Temperaturen unterhalb von 5 °C weist der angerührte Putz eine blaue Färbung auf, was anzeigt, dass eine sachgerechte Verarbeitung nicht möglich ist. Der getrocknete und ausgehärtete Putz weist bei Temperaturen unterhalb von 5 °C ebenfalls eine blaue Färbung auf, was anzeigt, dass eine sichere Anwendung von wasserbasierten Beschichtungen nicht möglich ist. In gleicher Weise lassen sich Betone oder andere Putze herstellen, gegebenenfalls unter Einsatz anderer Rohstoffe, wie beispielsweise Kunstharz, Kalk oder Gips.

### Beispiel 4:

Die nachfolgenden Ausführungsbeispiele betreffen einen Fliesenkleber und einen Teppichkleber. In einer Mischung aus 50 Gew.-% handelsüblichem Fliesenkleber, beispielsweise mit der Bezeichnung Ardex® X7G Plus der Ardex GmbH, und 45 Gew.-% Wasser, werden 5 Gew.-% einer ca. 50 %igen thermochromen Dispersion mit der Bezeichnung ChromaZone® Dispersion der Thermographic Measurements Co. Ltd. mit einer Schalttemperatur von 5 °C eingemischt. Die thermochrome Dispersion weist blaue thermochrome Pigmente auf. Bei Temperaturen unterhalb von 5 °C weist der angerührte Fliesenkleber eine blaue Färbung auf, was anzeigt, dass eine sachgerechte Verarbeitung nicht möglich ist.

Zur Herstellung eines erfindungsgemäßen Teppichklebers wird in einen handelsüblichen Teppichkleber, beispielsweise einen Teppichkleber mit der Bezeichnung Ardex® T 2210 der Ardex GmbH, ein pulverförmiges thermochromes Material mit der Bezeichnung ChromaZone® Free Flowing Powder der Thermographic Measurements Co. Ltd. mit einer Schalttemperatur von 10 °C und mit einem Anteil von 2 Gew.-% eingemischt. Das thermochrome Material weist blaue thermochrome Pigmente auf.

### Beispiel 5:

Das Beispiel 5 betrifft Trägerbahnen mit hinterschnittenen Noppen und einem aufkaschierten PP-Vlies, beispielsweise einem Vlies mit der Bezeichnung DITRA® Quattro der Schlüter-Systems GmbH, als Entkopplungsmatte zwischen einem Untergrund und keramischen Belägen. Bei der Vliesproduktion werden der Polymerschmelze neben an sich bekannten Additiven 5 Gew.-% eines thermochromen Materials mit der Bezeichnung THERMOBATCH® der Thermographic Measurements Co. Ltd. mit einer Schalttemperatur von 5 °C und 3 Gew.-% eines UV-Absorbtionsmaterials, beispielsweise einer Mischung aus PP mit einem Anteil von 20 Gew.-% eines Absorptionsmittels mit der Bezeichnung Hombitec® RM 230 L der Sachtleben Chemie GmbH, zugegeben. Bei Temperaturen unterhalb der Schalttemperatur zeigt das Vlies durch eine Farbveränderung die Verarbeitungsgrenze für handelsübliche Fliesenkleber an. Alternativ kann die Noppenbahn als solche während der Herstellung mit dem vorgenannten thermochromen Material in Masse eingefärbt werden, wobei, vorzugsweise, nur eine von mehreren coextrudierten Schichten eingefärbt wird.

### Beispiel 6:

Das nachfolgende Ausführungsbeispiel betrifft Dampfsperren und Unterdeckbahnen. Auch hier können Vliese oder Flachfolien gemäß Beispiel 5 als Bahnen oder Teil eines Verbundes eingesetzt werden und ein thermochromes Material aufweisen, um die Verklebbarkeit anzuzeigen.

Beispielsweise kann eine transparente Grundfolie aus PP-Homopolymer mit einem Flächengewicht von 85 g/m² hergestellt werden, wobei die Grundfolie 2 Gew.-% eines Flammschutzmittels mit der Bezeichnung Flamestab NOR 116 der Ciba Spezialitätenchemie Lampertheim GmbH und 1,5 Gew.-% eines UV-Absorptionsmaterials aufweist. Die Grundfolie wird karo-rasterförmig mit einer thermochromen Druckfarbe mit der Bezeichnung THERMO STAR@ Flexo Ink 1010 der Thermographic Measurements Co. Ltd. mit einem Flächengewicht von 10 g/m² bedruckt, wobei das thermochrome Material schwarze thermochrome Pigmente mit einer Schalttemperatur von 5 °C aufweist. In einem anschließenden Arbeitsgang wird die so bedruckte Grundfolie unter Zulauf eines 22/11 PP-Drehergewebes mit einem Flächengewicht von 35 g/m² mit einer weiß eingefärbten PP-Homopolymer-Folie mit einem Flächengewicht von 85 g/m² beschichtet. Die Grundfolie zeigt in der Anwendung zur Sichtseite und weist bei Temperaturen unterhalb der Schalttemperatur schwarze Karomuster auf.

Zur Herstellung einer Dampfbremse kann eine thermochrome Dispersion mit der Bezeichnung ChromaZone® Dispersion der Thermographic Measurements Co. Ltd. mit einer Schalttemperatur von 5 °C bei der Herstellung eines Papiers dem Papiergrundstoff zugegeben werden. Die Dampfbremse weist einen dreischichtigen Aufbau auf, wobei jede Schicht ein Flächengewicht von 50 g/m² aufweist. Zwischen einer äußeren thermochromen Papierschicht und einer weiteren äußeren nichtthermochromen Papierschicht ist eine PE-Schicht vorgesehen. Zur Herstellung eines thermochromen Papiers kann auch vorgesehen sein, das Papier, wie in einem der vorhergehenden Beispiele beschrieben, zu bedrucken.

### Beispiel 7:

Das Ausführungsbeispiel betrifft die Herstellung einer Gipskartonplatte, wobei das in Beispiel 6 zur Einfärbung eines Papiers vorgesehene thermochrome Material in diesem Ausführungsbeispiel zur Einfärbung einer Pappe eingesetzt wird. Genausogut ist es möglich, eine thermochrome Pappe durch Bedrucken einer Pappe mit einem thermochromen Material zu erhalten. Die Gipskartonplatte weist auf wenigstens einer Seite eine thermochrome Pappe der vorbeschriebenen Art auf.

### Beispiel 8:

Das nachfolgende Ausführungsbeispiel betrifft eine Unterdeckbahn und Etiketten. Ein thermisch vorverfestigtes PP-Spinnvlies mit einem Flächengewicht von 17 g/m² wird mit einer Flotte aus 94 Gew.-% Acrylat-Binder mit der Bezeichnung Acronal® S 312 D der BASF AG und 6 Gew.-% einer thermochromen Dispersion mit der Bezeichnung Kromagen Concentrate der Thermographic Measurements Co. Ltd. mit einer irreversiblen Schalttemperatur von 90 °C fouladiert. Nach der Trocknung weist das Vlies ein Flächengewicht von ca. 24 g/m² auf. Dieses chemisch nachverfestigte Vlies wird mit einer atmungsaktiven Folie und mit einem weiteren herkömmlichen PP-Vlies zu einer Unterdeckbahn bzw. einem Verbund verklebt. Das thermochrome Material ermöglicht den Nachweis einer signifikanten Überschreitung der Gebrauchstemperatur von 80 °C in einfacher Weise.

Bei einer weiteren Ausführungsform kann vorgesehen sein, Etiketten, die ein thermochromes Material mit ähnlichen Eigenschaften aufweisen, in regelmäßigen Abständen, beispielsweise im Abstand von 1 m, auf die Rückseite der Unterdeckbahn zu kleben.

### Beispiel 9:

Das Ausführungsbeispiel betrifft die Herstellung von Dampfbremsen bzw. Dampfsperren als rauminnenseitige Luftdichtheitsschichten zur Detektion von Wärmebrücken in Gebäuden. Zunächst wird eine transparente Grundfolie aus einem PP-Homopolymer mit einem Flächengewicht von 85 g/m² hergestellt. Die Grundfolie weist neben einem Flammschutzmittel mit einem Gewichtsanteil von 1,2 Gew.-% mit der Bezeichnung Flamestab NOR 116 der Ciba Spezialitätenchemie Lampertheim GmbH ein UV-Absorptionsmaterial mit einem Gewichtsanteil von 1,5 Gew.-% auf. Die Grundfolie wird karo-rasterförmig mit einer thermochromen Druckfarbe mit der Bezeichnung THERMO STAR® Flexo Ink 1010 der Thermographic Measurements Co. Ltd. mit einem Flächengewicht von 10 g/m² bedruckt. Die thermochrome Druckfarbe weist rote thermochrome Pigmente auf mit einer Schalttemperatur von 13 °C. Anschließend wird die bedruckte Grundfolie unter Zulauf eines 22/11 PP-Drehergewebes mit einem Flächengewicht von 35 g/m² mit einer weiß eingefärbten PP-Homopolymer-Folie beschichtet, die ein Flächengewicht von 85 g/m² aufweist. Die Grundfolie zeigt im Anwendungszustand zur Sichtseite und weist unterhalb der Schalttemperatur rote Karomuster auf.

Bei einer anderen Ausführungsform werden die Bändchen, aus denen das Drehergewebe besteht, bei der Herstellung mit einem thermochromen Material in Masse, vorzugsweise bei der Extrusion, eingefärbt. Hier wird auf die vorbeschriebenen Beispiele Bezug genommen. Als thermochromes Material kann ein Produkt mit der Bezeichnung THERMOBATCH® der Thermographic Measurements Co. Ltd. Eingesetzt werden.

Bei einer Ausführungsform einer variablen Dampfbremse, deren Wasserdampfdurchlässigkeit abhängig von der Umgebungsfeuchte ist, ist es vorgesehen, dass ein weißes PP-Spinnvlies mit einem Flächengewicht von 35 g/m² mit einer Mischung aus 93 Gew.-% Natrium-Zink-Ionomer und 4 Gew.-% eines pulverförmigen thermochromen Materials mit der Bezeichnung THERMO-BATCH® der Thermographic Measurements Co. Ltd., das eine Schalt-temperatur von 13 °C aufweist, und 3 Gew.-% eines UV-Absorbtionsmaterials extrusionsbeschichtet wird. Bei dem UV-Absorbtionsmaterials handelt es sich um LDPE mit einem Anteil von 20 Gew.-% eines UV-Absorptionsmittels mit der Bezeichnung Hombitec® RM 230 L der Sachtleben Chemie GmbH.

Zur Herstellung einer anderen Ausführungsform einer variablen Dampfbremse ist vorgesehen, eine Folie aus PA 6 mit einem Flächengewicht von 30 g/m² mit einer thermochromen Druckfarbe mit der Bezeichnung THERMO STAR® Flexo Ink 1010 der Thermographic Measurements Co. Ltd. zu bedrucken. Die thermochrome Druckfarbe weist rote Pigmente auf mit einer Schalttemperatur von 13 °C. Die Folie aus PA 6 wird mit ca. 10 g/m² bedruckt. Anschließend wird so erhaltene thermochrome Polyamidfolie mit einer weiteren Folie aus PA 6 mit einem Flächengewicht von 30 g/m² unter Verwendung eines vollflächig aufgebrachten transparenten Schmelzklebers mit der Bezeichnung Griltex D 1299 A der Firma EMS-Griltech kaschiert.

Eine weitere Ausführungsform sieht vor, eine Dampfbremse durch Beschichtung eines thermochromen PP-Vlieses mit einem Flächengewicht von 80 g/m² mit einer transluzenten EVA-Folie mit einem Flächengewicht von 80 g/m² herzustellen. Die transluzente EVA-Folie weist 3 Gew.-% eines UV-Absorp-tionsmaterials aus LDPE und 20 Gew.-% eines UV-Absorptionsmittels mit der Bezeichnung Hombitec® RM 230 L der Sachtleben Chemie GmbH auf. Bei der Herstellung des thermochromen Vlieses werden zwei Spinnbalken eingesetzt, wobei der Polymerschmelze der sichtseitigen Lage neben an sich bekannten Additiven ein thermochromes Material mit der Bezeichnung THERMO-BATCH® der Thermographic Measurements Co. Ltd. zugegeben wird. Der Gewichtsanteil des thermochromen Materials beträgt 5 Gew.-%. Das thermochrome Material weist thermochrome Pigmente mit einer Schalttemperatur von 15 °C auf.

## Patentansprüche

1. Baustoffmaterial zur Verwendung in einem Baubereich aufweisend wenigstens ein thermochromes Material, wobei das thermochrome Material die Farbe und/oder die Transparenz in Abhängigkeit von einer Schalttemperatur ändert, **dadurch gekennzeichnet, dass** eine Farb- und/oder eine Transparenzänderung im Temperaturbereich der unteren und/oder der oberen Verarbeitungstemperatur des Baustoffmaterials erfolgt.

2. Baustoffmaterial nach Anspruch 1, **dadurch gekennzeichnet, dass** die Schalttemperatur der Verarbeitungstemperatur entspricht oder dass die Schalttemperatur um maximal +/- 10 °C von der Verarbeitungstemperatur abweicht.

3. Baustoffmaterial nach Anspruch 1 oder 2, **dadurch gekennzeichnet, dass** das thermochrome Material eine Schalttemperatur von ca. 0 °C bis 15 °C aufweist oder das thermochrome Material eine Schalttemperatur von ca. -10 °C bis 10 °C aufweist.

4. Baustoffmaterial nach einem der Ansprüche 1 bis 3, **dadurch gekennzeichnet, dass** bei Erreichen der Schalttemperatur eine reversible Farb- und/oder Transparenzänderung erfolgt.

5. Baustoffmaterial nach einem der vorhergehenden Ansprüche, **dadurch gekennzeichnet, dass** wenigstens ein weiteres thermochromes Material mit einer weiteren Schalttemperatur vorgesehen ist.

6. Baustoffmaterial nach einem der vorhergehenden Ansprüche, **dadurch gekennzeichnet, dass** das Baustoffmaterial bahn-, band- oder plattenförmig ist und eine zumindest bereichsweise mit dem thermochromen Material beschichtete oder bedruckte Trägerschicht oder einen zumindest bereichsweise mit dem thermochromen Material beschichteten oder bedruckten Trägerkörper oder eine das thermochrome Material aufweisende Trägerschicht oder einen Trägerkörper aufweist.

7. Baustoffmaterial nach einem der vorhergehenden Ansprüche, **dadurch gekennzeichnet, dass** das thermochrome Material inhomogen in der Trägerschicht verteilt ist und/oder dass eine das thermochrome Material enthaltende Klebstoffschicht vorgesehen ist und/oder dass eine das thermochrome Material enthaltende Vliesschicht vorgesehen ist.

8. Baustoffmaterial zur Verwendung in einem Baubereich mit einer Verpackung aus einem Verpackungsmaterial, wobei das Verpackungsmaterial ein thermochromes Material aufweist, welches die Farbe und/oder die Transparenz in Abhängigkeit von einer Schalttemperatur ändert, wobei eine Farb- und/oder Transparenzänderung im Temperaturbereich der unteren und/oder der oberen Verarbeitungstemperatur des Baustoffmaterials erfolgt.

9. Baustoffmaterial zur Verwendung in einem Baubereich mit einem Etikett zu Etikettieren des Baustoffmaterials, wobei das Etikett ein thermochromes Material aufweist, welches die Farbe und/oder die Transparenz in Abhängigkeit von einer Schalttemperatur ändert, wobei eine Farb- und/oder Transparenzänderung im Temperaturbereich der unteren und/oder oberen Verarbeitungstemperatur des Baustoffmaterials erfolgt.

## Claims

1. A building material for use in the building sector, comprising at least one thermochrome material, wherein the thermochrome material changes color and/or transparency as a function of a switching temperature, **characterized in that** a color and/or transparency change occurs within the temperature range of the lower and/or of the upper processing temperature of the building material.

2. The building material according to claim 1, **characterized in that** the switching temperature corresponds to the processing temperature, or that the switching temperature deviates from the processing temperature by not more than +/- 10°C.

3. The building material according to claims 1 or 2, **characterized in that** the thermochrome material has a switching temperature of about 0°C to 15°C, or the thermochrome material has a switching temperature of about -10°C to 10°C.

4. The building material according to one of the preceding claims 1 to 3, **characterized in that** upon achieving the switching temperature, a reversible color and/or transparency change occurs.

5. The building material according to one of the preceding claims, **characterized in that** at least one additional thermochrome material having an additional switching temperature is provided.

6. The building material according to one of the preceding claims, **characterized in that** the building material is present in the shape of a sheet, ribbon, or plate, and has, at least in some areas, a carrier layer coated or imprinted with the thermochrome material, or, at least in some areas, a carrier body coated or imprinted with the thermochrome material, or has a carrier layer or a carrier body, having the thermochrome material.

7. The building material according to one of the preceding claims, **characterized in that** the building material is distributed in the carrier layer inhomogeneously, and/or an adhesive layer containing the thermochrome material is provided, and/or a non-woven layer containing the thermochrome material is provided.

8. The building material for use in the building sector, comprising a packaging made from a packaging material, wherein the packaging material has a thermochrome material, which changes color and/or transparency as a function of a switching temperature, wherein a color and/or transparency change occurs within the temperature range of the lower and/or or the upper processing temperature of the building material.

9. The building material for use in the building sector, having a label for labeling the building material, wherein the label has a thermochrome material, which changes color and/or transparency as a function of a switching temperature, wherein a color and/or transparency change occurs within the temperature range of the lower and/or or the upper processing temperature of the building material.

## Revendications

1. Matériau de construction pour une utilisation dans le domaine du bâtiment, comprenant au moins un matériau thermochrome, le matériau thermochrome modifiant la couleur et/ou la transparence en fonction d'une température de transition, **caractérisé en ce qu'**une modification de la couleur et/ou une modification de la transparence a lieu dans la plage de températures correspondant à la température inférieure de mise en oeuvre et/ou à la température supérieure de mise en oeuvre du matériau de construction.

2. Matériau de construction selon la revendication 1, **caractérisé en ce que** la température de transition correspond à la température de mise en oeuvre, ou que la température de transition s'écarte d'au plus ± 10°C, dans un sens ou dans l'autre de la température de mise en oeuvre.

3. Matériau de construction selon la revendication 1 ou 2, **caractérisé en ce que** le matériau thermochrome présente une température de transition de 0 à 15°C, ou que le matériau thermochrome présente une température de transition d'environ-10°C à 10°C.

4. Matériau de construction selon l'une des revendications 1 à 3, **caractérisé en ce qu'**une modification réversible de la couleur et/ou de la température a lieu quand est atteinte la température de transition.

5. Matériau de construction selon l'une des revendications précédentes, **caractérisé en ce qu'**est prévu au moins un matériau thermochrome supplémentaire, ayant une autre température de transition.

6. Matériau de construction selon l'une des revendications précédentes, **caractérisé en ce que** le matériau de construction a la forme d'une feuille continue, d'une bande ou d'une plaque, et comprend une couche support, revêtue ou imprimée au moins par zones par un matériau thermochrome, ou un corps formant support, revêtu ou imprimé au moins par zones par le matériau thermochrome, ou une couche support ou un corps formant support comprenant le matériau thermochrome.

7. Matériau de construction selon l'une des revendications précédentes, **caractérisé en ce que** le matériau thermochrome est réparti d'une manière non homogène dans la couche support, et/ou qu'est prévue une couche d'adhésif contenant le matériau thermochrome, et/ou qu'est prévue une couche d'un non-tissé, contenant le matériau thermochrome.

8. Matériau de construction pour une utilisation dans le domaine du bâtiment, comportant un emballage en un matériau d'emballage, le matériau d'emballage comprenant un matériau thermochrome, qui modifie la couleur et/ou la transparence en fonction d'une température de transition, une modification de la couleur et/ou de la transparence ayant lieu dans la plage de températures de la température inférieure de mise en oeuvre et/ou de la température supérieure de mise en oeuvre du matériau de construction.

9. Matériau de construction pour une utilisation dans le domaine du bâtiment, comportant une étiquette pour étiqueter le matériau de construction, l'étiquette comprenant un matériau thermochrome qui modifie la couleur et/ou la transparence en fonction d'une température de transition, une modification de la couleur et/ou de la transparence ayant lieu dans la plage de températures de la température inférieure de mise en oeuvre et/ou de la température supérieure de mise en oeuvre du matériau de construction.
